# EUROPÄISCHE PATENTSCHRIFT

(11) **EP 0 745 504 B1**
(45) Veröffentlichungstag und Bekanntmachung des Hinweises auf die Patenterteilung: **14.10.1998**
(21) Anmeldenummer: 96108111.4
(22) Anmeldetag: 21.05.1996
(51) Int. Cl.: B60M 1/26

(54) **Nachspanngewicht zum Abspannen von Kettenwerken**
Counterweight for tensioning of catenary
Contrepoids de mise sous tension du caténaire

(30) Priorität: 02.06.1995 DE 29509187 U
(43) Veröffentlichungstag der Anmeldung: 04.12.1996
(73) Patentinhaber: SIEMENS AKTIENGESELLSCHAFT, 80333 München (DE)
(72) Erfinder: Menhorn, Hermann, 23879 Mölln (DE)

(56) Entgegenhaltungen:
- DE-A- 2 630 672
- GB-A- 1 076 364

## Beschreibung

Die Erfindung betrifft ein Nachspanngewicht zum Abspannen von Kettenwerken.

Derartige Nachspanngewichte sind über ein Seil mit einem Spannrad eines Radspanners verbunden. Radspanner sind Vorrichtungen zum Abspannen von Kettenwerken. Sie halten automatisch und temperaturunabhängig eine gleichmäßige Zugkraft in Tragseil und Fahrdraht aufrecht. Die Zugkraft wird durch den Aufbau von Nachspanngewichtssäulen mittels einzelner Nachspanngewichte aus Beton oder Grauguß eingestellt. Die Gewichtssäule wird an einer parallel am Mast oder Bauwerk befestigten Zugstange geführt. Bei geeigneter Mastausbildung kann die Gewichtssäule auch im Inneren eines Mastes geführt werden. An öffentlich zuganglichen Stellen, z.B. Bahnsteigen, sind um die Gewichtssäulen herum Schutzkörbe angeordnet.

Das im Betriebszustand freihängende Spannrad wird bei Zugentlastung durch eine Fangvorrichtung arretiert; bei Seilbruch kann die Gewichtssäule nicht zu Boden fallen.

Für eine Abspannkraft von 10 kN ist bei der Gewichtssäule eine Länge von 1600 mm erforderlich, bei einer Abspannkraft von 20 kN beträgt die Länge der Gewichtssäule 3200 mm.

Aufgabe der vorliegenden Erfindung ist es, ein Nachspanngewicht der eingangs genannten Art zu schaffen, das ein geringeres Volumen aufweist.

Die Aufgabe wird erfindungsgemäß durch die Merkmale des Anspruchs 1 gelöst. Vorteilhafte Ausgestaltungen der Erfindung sind in den weiteren Ansprüchen beschrieben.

Das erfindungsgemäße Nachspanngewicht zum Abspannen von Kettenwerken umfaßt ein topfförmiges Gehäuse, bei dem wenigstens zwei Teile seiner Gehäusewand am offenen Gehäuseende durch wenigstens einen Steg miteinander verbunden sind. Am Gehäuseboden ist radial außen ein erstes Rohr und gegenüberliegend, radial außen ein zweites Rohr angeordnet, wobei die beiden Rohre parallel zur Längsachse des Gehäuses verlaufen und an beiden Seiten offen sind. Am Gehäuseboden ist weiterhin ein drittes Rohr angeordnet, das in der Längsachse des Gehäuses liegt und an beiden Seiten offen ist. Im montierten Zustand ist im ersten Rohr und im zweiten Rohr jeweils ein Führungsseil geführt und im dritten Rohr eine Zugstange eingesetzt, die mit ihrem einen Ende mit einem Radspannerseil und mit ihrem anderen Ende kraftschlüssig mit dem Gehäuseboden verbunden wird.

Das Gehäuse des Nachspanngewichts nach Anspruch 1 ist mit einem Füllstoff gefüllt, dessen spezifisches Gewicht größer ist als das spezifische Gewicht von Stahl. Bei gleicher Abspannkraft ist damit das Nachspanngewicht gemäß der Erfindung kleiner als konventionelle Nachspanngewichte aus Beton oder Grauguß.

Bei der Verwendung von Nachspanngewichten nach Anspruch 1 kann die Fahrdrahthöhe und damit die Höhe der Nachspannmasten abgesenkt werden, da eine aus diesen Nachspanngewichten gebildete Gewichtssäule eine geringere Länge aufweist.

Alternativ kann durch die Nachspanngewichte gemäß Anspruch 1 auch bei Doppeltragseilen bzw. Doppelfahrdrähten unter Beibehaltung der Nachspannlänge von maximal 750 m, eine Abspannkraft von 20 kN realisiert werden.

Ein Nachspanngewicht gemäß Anspruch 2 ist in vorteilhafter Weise einfach herzustellen, wobei eine Ausgestaltung nach Anspruch 3 gegenüber Nachspanngewichten aus Grauguß den Vorteil eines Rostschutzes bietet.

Besonders groß wird die Reduzierung des Volumens und damit eine mögliche Verringerung der Länge des Nachspanngewichtes bei einer Ausführungsform nach Anspruch 4.

Das erfindungsgemäße Nachspanngewicht kann verschiedene Querschnitte aufweisen. Beispiele hierfür sind in den Ansprüchen 5 und 6 aufgeführt.

Bei Nachspanngewichten, die gemäß Anspruch 8 ausgebildet sind, kann durch die Stiftverzahnung zwischen dem jeweils oberen und/oder unteren Nachspanngewicht auf einfache Weise eine Nachspanngewichtssäule zusammengestellt werden.

Weitere Vorteile und Einzelheiten der Erfindung ergeben sich aus der nachfolgenden Beschreibung eines Ausführungsbeispiel= anhand der Zeichnung und in Verbindung mit den weiteren Ansprüchen. Es zeigen:
- FIG 1: eine Seitenansicht des erfindungsgemäßen Nachspanngewichtes,
- FIG 2: eine Draufsicht auf das Nachspanngewicht gemäß FIG 1.

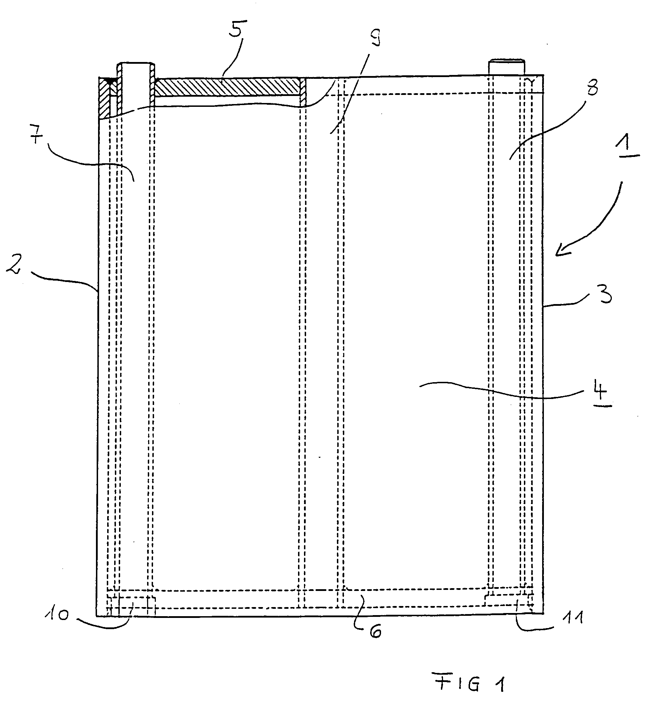

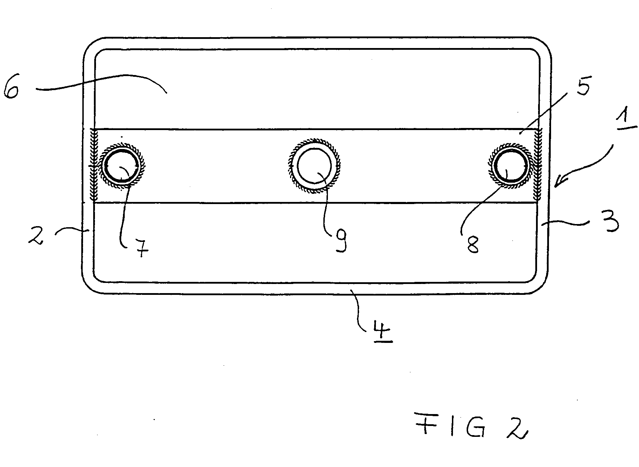

In den FIG 1 und 2 ist mit 1 ein topfförmiges Gehäuse bezeichnet, das im dargestellten Ausführungsbeispiel einen rechteckigen Querschnitt mit abgerundeten Ecken aufweist.

Am offenen Ende des topfförmigen Gehäuses 1 sind die beiden gegenüberliegenden Schmalseiten 2 und 3 der Gehäusewand 4 durch einen Steg 5 miteinander verbunden.

Am Gehäuseboden 6 ist radial außen ein erstes Rohr 7 angeordnet. Gegenüberliegend ist, ebenfalls radial außen, ein zweites Rohr 8 angeordnet. Das erste Rohr 7 und das zweite Rohr 8 verlaufen parallel zur Längsachse des Gehäuses 1 und sind an beiden Seiten offen.

Weiterhin ist am Gehäuseboden 6 ein drittes Rohr 9 angeordnet, das in der Längsachse des Gehäuses 1 liegt und ebenfalls an beiden Seiten offen ist.

Bei aufgehängtem Nachspanngewicht ist im ersten Rohr 7 und im zweiten Rohr 8 jeweils ein in der Zeichnung nicht dargestelltes Führungsseil geführt.

Im dritten Rohr 9 ist im montierten Zustand eine ebenfalls nicht dargestellte Zugstange eingesetzt, die mit ihrem einen Ende mit einem Radspannerseil und mit ihrem anderen Ende kraftschlüssig mit dem Gehäuseboden 6 verbunden ist.

Das erste Rohr 7 und das zweite Rohr 8 ragen über das offene Ende des Gehäuses 1 hinaus.

Weiterhin weist der Gehäuseboden 6 an seiner Unterseite eine Aussparung 10 für das erste Rohr 7 und eine Aussparung 11 für das zweite Rohr 8 eines weiteren, identisch aufgebauten Nachspanngewichtes auf, das unterhalb des dargestellten Nachspanngewichtes mit diesem zu einer Nachspanngewichtssäule verbunden ist. Jede Aussparung 10 bzw.11 ist in ihrer Lage sowie in ihrem Querschnitt und in ihrer Tiefe auf die Lage sowie den Querschnitt und die überstehende Länge des ersten Rohres 7 bzw. des zweiten Rohres 8 abgestimmt.

Die Zugstange ist dann kraftschlüssig mit dem Gehäuseboden des unteren Nachspanngewichtes verbunden und durch das darüberliegende Nachspanngewicht bzw. die darüberliegender Nachspanngewichte hindurchgeführt und mit dem Radspannerseil verbunden. Im dargestellten Ausführungsbeispiel ist das topfförmige Gehäuse 1 mit Blei gefüllt und zusammen mit den Rohren 7 bis 9 aus feuerverzinktem Stahl hergestellt. Aufgrund der Bleifüllung des Gehäuses 1 kann die Gewichtssäule für eine Abspannkraft von 10 kN von 1600 mm auf 1100 mm bzw. für eine Abspannkraft von 20 kN von 3200 mm auf 2200 mm reduziert werden.

Durch die Fertigung des topfförmigen Gehäuses 1 sowie der Rohre 7 bis 9 aus feuerverzinktem Stahl ist ein optimaler Rostschutz gewährleistet.

## Patentansprüche

1. Nachspanngewicht zum Anspannen von Kettenwerken, das folgende Merkmale umfaßt:
- Ein topfförmiges Gehäuse (1), bei dem wenigstens zwei Teile (2,3) seiner Gehäusewand (4) am offenen Gehäuseende durch wenigstens einen Steg (5) miteinander verbunden sind,
- am Gehäuseboden (6) ist radial außen ein erstes Rohr (7) und gegenüberliegend, radial außen ein zweites Rohr (8) angeordnet, wobei die beiden Rohre (7,8) parallel zur Längsachse des Gehäuses (1) verlaufen und an beiden Seiten offen sind,
- am Gehäuseboden (6) ist ein drittes Rohr (9) angeordnet, das in der Längsachse des Gehäuses (1) liegt und an beiden Seiten offen ist,
- das Gehäuse (1) ist mit einem Füllstoff gefüllt, dessen spezifisches Gewicht größer ist als das spezifische Gewicht von Stahl.

2. Nachspanngewicht nach Anspruch 1,
**dadurch gekennzeichnet**,
daß das Gehäuse (1) und die Rohre (7 bis 9) aus Stahl gefertigt sind.

3. Nachspanngewicht nach Anspruch 2,
**dadurch gekennzeichnet**,
daß das Gehäuse (1) und die Rohre (7 bis 9) feuerverzinkt sind.

4. Nachspanngewicht nach Anspruch 1,
**dadurch gekennzeichnet**,
daß als Füllstoff Blei vorgesehen ist.

5. Nachspanngewicht nach Anspruch 1,
**dadurch gekennzeichnet**,
daß das Gehäuse (1) einen runden Querschnitt aufweist.

6. Nachspanngewicht nach Anspruch 1,
**dadurch gekennzeichnet**,
daß das Gehäuse (1) einen rechteckigen Querschnitt aufweist.

7. Nachspanngewicht nach Anspruch 1,
**dadurch gekennzeichnet**,
daß die axiale Länge des ersten Rohres (7) und des zweiten Rohres (8) größer ist als die Höhe des Gehäuses (1).

8. Nachspanngewicht nach Anspruch 7,
**dadurch gekennzeichnet**,
daß der Gehäuseboden (6) an seiner Unterseite Aussparungen (10,11) aufweist, die in ihrer Lage sowie in ihren Querschnitten und in ihrer Tiefe mit den Lagen sowie den Querschnitten und den überstehenden Längen des ersten Rohres (7) sowie des zweiten Rohres (8) korrespondieren.

## Claims

1. Counterweight for tensioning catenary works, which comprises the following features:
- a pot-shaped housing (1), in which at least two portions (2, 3) of the housing wall (4) thereof are connected to each other at the open housing end by at least one web (5),
- arranged on the housing base (6), radially on the outside, is a first tube (7) and opposite, radially on the outside, is a second tube (8), both tubes (7, 8) extending in parallel with the longitudinal axis of the housing (1) and being open on both sides,
- arranged on the housing base (6) is a third tube (9), which lies in the longitudinal axis of the housing (1) and is open on both sides,
- the housing (1) is filled with a filler, the specific gravity of which is greater than the specific gravity of steel.

2. Counterweight according to claim 1,
characterised in that the housing (1) and the tubes (7 to 9) are made of steel.

3. Counterweight according to claim 2,
characterised in that the housing (1) and the tubes (7 to 9) are hot-dip galvanized.

4. Counterweight according to claim 1,
characterised in that lead is provided as a filler.

5. Counterweight according to claim 1,
characterised in that the housing (1) has a round cross-section.

6. Counterweight according to claim 1,
characterised in that the housing (1) has a rectangular cross-section.

7. Counterweight according to claim 1,
characterised in that the axial length of the first tube (7) and of the second tube (8) is greater than the height of the housing (1).

8. Counterweight according to claim 7,
characterised in that the housing base (6) has, on its underside, recesses (10, 11), which correspond in terms of their position and also in terms of their cross-sections and in terms of their depth with the positions and also the cross-sections and the protruding lengths of the first tube (7) and the second tube (8).

## Revendications

1. Contrepoids pour la mise sous tension de caténaires, qui comportent les caractéristiques suivantes :
- un boîtier (1) en forme de pot, dans lequel au moins deux parties (2, 3) de sa paroi (4) de boîtier sont reliées mutuellement à l'extrémité de boîtier ouverte par au moins une barre (5),
- sur le corps (6) de boîtier, sont disposés, radialement vers l'extérieur un premier tube (7) et, a l'opposé, un deuxième tube (8) radialement vers l'extérieur, les deux tubes (7, 8) s'étendant parallèlement à l'axe longitudinal du boîtier (1) et étant ouverts des deux côtés,
- un troisième tube (9) est monté sur le corps (6) de boîtier, se trouve dans l'axe longitudinal du boîtier (1) et est ouvert des deux côtés,
- le boîtier (1) est empli d'une matière de remplissage, dont la masse volumique est plus grande que la masse volumique de l'acier.

2. Contrepoids suivant la revendication 1, caractérisé en ce que le boîtier (1) et les tubes (7 à 9) sont fabriqués en acier.

3. Contrepoids suivant la revendication 2, caractérisé en, ce que le boîtier (1) et les tubes (7 à 9) sont galvanisés à chaud.

4. Contrepoids suivant la revendication 1, caractérisé en ce qu'il est prévu, en tant que matière de remplissage, du plomb ;

5. Contrepoids suivant la revendication 1, caractérisé en ce que le boîtier (1) a une section transversale arrondie.

6. Contrepoids suivant la revendication 1, caractérisé en ce que le boîtier (1) a une section transversale carrée.

7. Contrepoids suivant la revendication 1, caractérisé en ce que la longueur axiale des premier tube (7) et deuxième tube (8) est plus grande que la hauteur du boîtier (1).

8. Contrepoids suivant la revendication 7, caractérisé en ce que le corps (6) de boîtier comporte de son côté inférieur des évidements (10, 11), dont la position ainsi que la coupe transversale et la profondeur correspondent aux positions ainsi qu'aux coupes transversales et aux longueurs faisant saillie du premier tube (7) ainsi que du deuxième tube (8).
